Europäisches Patentamt

European Patent Office

Office européen des brevets

(19)

(11) Numéro de publication : **0 434 547 B1**

## (12) FASCICULE DE BREVET EUROPEEN

(45) Date de publication du fascicule du brevet :
28.06.95 Bulletin 95/26

(51) Int. Cl.⁶ : **G11B 5/39,** G11B 5/49,
G11B 15/12

(21) Numéro de dépôt : **90403651.4**

(22) Date de dépôt : **18.12.90**

(54) **Tête de lecture multipiste.**

(30) Priorité : **22.12.89 FR 8917082**

(43) Date de publication de la demande :
**26.06.91 Bulletin 91/26**

(45) Mention de la délivrance du brevet :
**28.06.95 Bulletin 95/26**

(84) Etats contractants désignés :
**DE GB IT NL**

(56) Documents cités :
**NL-A- 7 510 306**
**US-A- 3 932 731**
**US-A- 4 303 956**
**US-A- 4 356 523**
**PATENT ABSTRACTS OF JAPAN vol. 10, no.
358 (P-522)(2415) 02 décembre 1986, & JP-A-61
153897 (NEC CORP) 12 Juillet 1986**
**PATENT ABSTRACTS OF JAPAN vol. 1, no.
155 (E-073) 12 décembre 1977, & JP-A-52
098510 (TOKYO SHIBAURA DENKI K.K.) 18
août 1977,**
**PATENT ABSTRACTS OF JAPAN vol. 3, no. 41
(E-103) 10 avril 1979, & JP-A-54 021315 (MITSU-
BISHI DENKI K.K.) 17 février 1979,**

(56) Documents cités :
**PATENT ABSTRACTS OF JAPAN vol. 7, no. 64
(P-183)(1209) 17 mars 1983, & JP-A-57 208624
(HITACHI SEISAKUSHO K.K.) 21 décembre
1982,**
**PATENT ABSTRACTS OF JAPAN vol. 4, no. 31
(P-2)(513) 18 mars 1980, & JP-A-55 004738
(MITSUBISHI DENKI K.K.) 14 janvier 1980,**

(73) Titulaire : **THOMSON-CSF**
**173, Boulevard Haussmann**
**F-75008 Paris (FR)**

(72) Inventeur : **Colineau, Joseph**
**Thomson-CSF,**
**SCPI,**
**Cedex 67**
**F-92045 Paris La Défense (FR)**
Inventeur : **Coutellier, Jean-Marc**
**Thomson-CSF,**
**SCPI,**
**Cedex 67**
**F-92045 Paris La Défense (FR)**

(74) Mandataire : **Chaverneff, Vladimir et al**
**THOMSON-CSF**
**SCPI**
**B.P. 329**
**50, rue Jean-Pierre Timbaud**
**F-92402 Courbevoie Cédex (FR)**

EP 0 434 547 B1

## Description

L'invention se rapporte à une tête de lecture multipiste.

On utilise des têtes magnétiques multipistes d'écriture multiplexées pour enregistrer un grand nombre de pistes (environ 1 000) dans des imprimantes magnétographiques. On connaît également une tête d'écriture d'après la Demande de Brevet français 88 05592. Ces têtes sont commandées par adressage matriciel, ce qui permet d'envoyer par exemple sur les colonnes successives de têtes élémentaires les informations à enregistrer, et de sélectionner par une excitation convenable des fils de lignes l'ensemble des têtes à valider d'une même ligne.

Par contre, les têtes de lecture permettant de lire des supports magnétiques multipistes enregistrés avec lesdites têtes d'écriture sont de type magnéto-optique, difficiles à intégrer sous un faible volume.

On connaît d'après le document NL-A-7 510 306 une tête magnétique matricielle d'enregistrement-lecture comportant des éléments magnéto-résistifs enveloppés par le matériau des circuits magnétiques, le courant de sélection aussi bien que le signal lu passant dans ces éléments, ce qui nécessite la réalisation de diodes en série avec chaque élément pour permettre une sélection correcte des têtes élémentaires.

La présente invention a pour objet une tête de lecture multipiste pouvant intégrer sous un faible volume un grand nombre de têtes élémentaires, et dont les performances soient bonnes dans des conditions d'utilisation variées.

La tête de lecture multipiste conforme à l'invention comporte un réseau matriciel de têtes élémentaires de type magnéto-résistif comprenant chacune un élément magnéto-résistif dans son circuit magnétique, est caractérisée en ce qu'au moins un élément magnéto-résistif est inséré en série dans le circuit magnétique de chaque tête élémentaire, l'ensemble des éléments magnéto-résistifs d'une même colonne étant électriquement reliés à un conducteur de colonne, les lignes de sélection de têtes élémentaires étant constituées par des conducteurs sensiblement perpendiculaires ou légèrement obliques par rapport aux colonnes d'éléments magnéto-résistifs et passant à proximité des entrefers des têtes élémentaires, un courant de sélection étant injecté dans la ligne à sélectionner.

Selon un autre aspect de l'invention, la tête de lecture multipiste est caractérisée en ce que dans chaque colonne les éléments magnéto-résistifs des têtes élémentaires sont électriquement reliées à un conducteur de colonne, l'élément magnéto-résistif étant inséré en série dans l'un des pôles de la tête élémentaire, les lignes matricielles étant constituées par des conducteurs de lignes sensiblement perpendiculaires aux colonnes, un courant d'inhibition étant injecté dans les lignes non sélectionnées pour saturer les pôles des têtes élémentaires de ces lignes.

La présente invention sera mieux comprise à la lecture de la description de plusieurs modes de réalisation, pris comme exemples non limitatifs et illustrés par le dessin annexé, sur lequel

- les figures 1 et 2 sont des schémas simplifiés de connexion de têtes élémentaires d'une tête de lecture conforme à l'invention,
- la figure 3 est un diagramme illustrant la variation de la résistivité dans un matériau magnétique en fonction de l'angle formé entre la direction du courant le traversant et la direction de son aimantation,
- les figures 4 à 7 sont des vues en plan simplifiés de différents modes de réalisation de têtes de lecture conformes à l'invention.

L'invention est décrite ci-dessous en référence à une tête de lecture de bandes magnétiques multipistes, mais il est bien entendu qu'elle peut coopérer avec d'autres supports magnétiques enregistrés en enregistrement multipistes. D'autre part, les modes de réalisation préférés de l'invention se rapportent à des têtes compactes (pour lire plusieurs dizaines ou centaines de pistes sur des bandes magnétiques d'une largeur de quelques millimètres ou quelques centimètres), mais il est bien entendu que l'invention peut également être mise en oeuvre pour des têtes de lecture de dimensions beaucoup plus grandes permettant de lire des supports magnétiques de grande largeur.

La tête de lecture de l'invention a une structure matricielle, ce qui veut dire qu'elle comporte plusieurs têtes élémentaires disposées en lignes et colonnes. Les lignes ne sont pas nécessairement perpendiculaires aux colonnes. Les dénominations lignes et colonnes sont arbitraires.

Dans la tête de l'invention, les têtes élémentaires fonctionnent selon le phénomène magnéto-résistif, c'est-à-dire qu'elles comportent un matériau dont la résistivité varie en fonction du champ magnétique auquel elles sont soumises. Pour mettre à profit la variation de leur résistivité, et donc obtenir un signal dont l'amplitude est fonction du champ magnétique influençant ces têtes élémentaires, on les relie électriquement en lignes et colonnes et on les fait parcourir par un courant électrique, les lignes étant, bien entendu, isolées électriquement des colonnes. Ce courant électrique est envoyé aux éléments magnéto-résistifs des différentes colonnes de têtes élémentaires, la sélection d'une ou de plusieurs têtes d'une ligne donnée étant réalisée en appliquant une tension ou un courant de sélection sur la ligne correspondante.

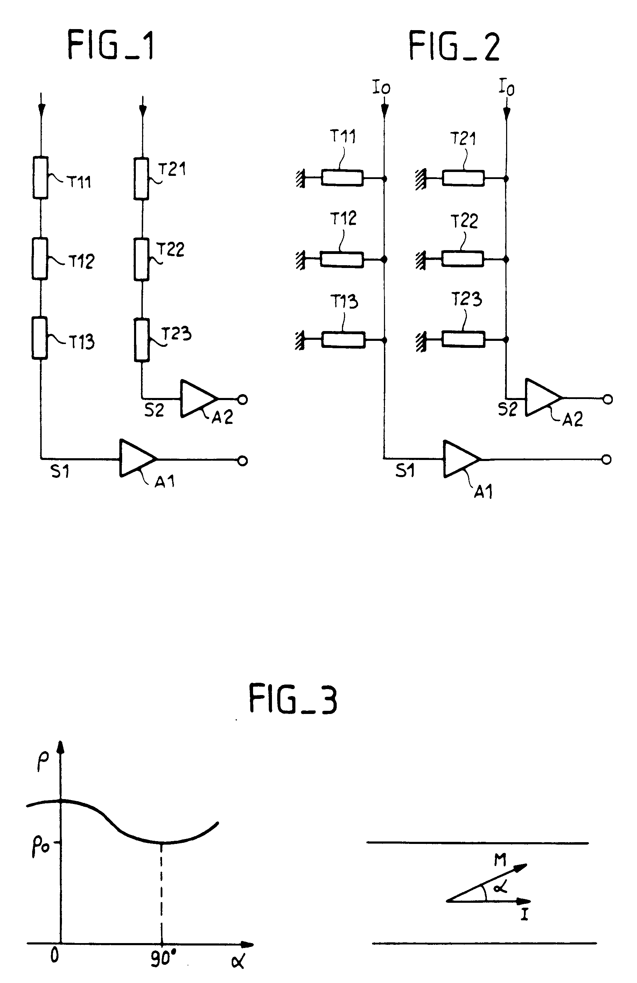

Sur les schémas des figures 1 et 2, on a représenté les éléments magnéto-résistifs d'une partie des têtes élémentaires d'une tête de lecture conforme à l'invention: on a représenté les éléments magnéto-résistifs des trois premières têtes des deux premières colonnes: T11, T12 et T13 pour la première colonne, et T21, T22, T23 pour la deuxième colonne.

Selon le mode de réalisation de la figure 1, dans chaque colonne les éléments T11, T12, T13... et T21, T22, T23... sont branchés en série, et chaque colonne reçoit une tension $V_o$.

Selon le mode de réalisation de la figure 2, dans chaque colonne les éléments T11... sont en parallèle, et chaque colonne reçoit un courant $I_o$.

Pour ces deux modes de réalisation, la sortie de chaque colonne est reliée à un préamplificateur A1, A2,...

Dans le mode de réalisation de la figure 1, si l'on appelle R la résistance au repos de chacun des éléments T11,... T23, Re la résistance d'entrée des préamplificateurs A1, A2,... n le nombre d'éléments dans chaque colonne, la variation $\Delta v$ de tension à l'entrée des préamplificateurs vaut, pour une variation $\Delta R$ d'un élément d'une colonne:

$$\Delta v = Io\, \Delta R\, \frac{Re}{nR + Re} = \frac{Io}{n} \cdot \frac{\Delta R}{R} \cdot Req$$

avec $Req = \dfrac{nR.Re}{nR + Re}$

Cette variation est donc proportionnelle au courant de mesure $I_o$ et à l'effet magnéto-résistif $\dfrac{\Delta R}{R}$ du matériau à résistivité variable.

En outre, si la résistance d'entrée Re des préamplificateurs est choisie suffisamment grande devant n.R, on obtient alors:

$$\Delta v = I_o\, \Delta R,$$

c'est-à-dire que le niveau de signal à l'entrée d'un préamplificateur est pratiquement le même que celui qui serait fourni par un dispositif à une seule tête élémentaire dans la colonne.

On peut démontrer que la composante de bruit prépondérante est le bruit Shottky, fonction du courant de mesure. Le rapport signal/bruit (S/N) s'exprime alors par la relation :

$$(S/N) = 1/n.\, \frac{\Delta R}{R}\sqrt{\frac{I_o}{2qB}}$$

q étant la charge de l'électron et B la bande passante utile.

On voit que ce rapport varie comme la racine carrée de $I_o$. On choisira donc $I_o$ aussi grand que le permet la dissipation thermique des éléments. Mais, ce rapport varie comme 1/n, et il faut donc maintenir n dans des limites raisonnables (par exemple quelques dizaines) pour ne pas trop détériorer le rapport S/B.

On a représenté en figure 3, la courbe de variation de la résistivité $\rho$ d'un matériau magnétique en fonction de l'angle $\alpha$ entre la direction du courant I parcourant ce matériau et la direction de l'aimantation $\mu$ de ce matériau. L'équation de cette courbe est de la forme:

$$\rho = \rho o\, (1 + \frac{\Delta \rho}{\rho}\cos^2 \alpha)$$

$\rho o$ étant la résistivité au repos de ce matériau.

Pour un matériau tel que le Permalloy (90 % Ni, 10 % Fe), $\Delta \rho / \rho o$ peut atteindre 5%.

Dans une tête de lecture multipiste, il faut se préoccuper non seulement du rapport S/N, mais également de la diaphonie. Pour accéder successivement à l'information captée par chacune des têtes élémentaires, il faut prévoir un dispositif de multiplexage. A cet effet, on peut faire appel à deux procédés différents: utilisation de la non-linéarité des têtes en fonction de l'angle de la magnétisation, ou mise en service et inhibition des têtes à l'aide de courants de commande.

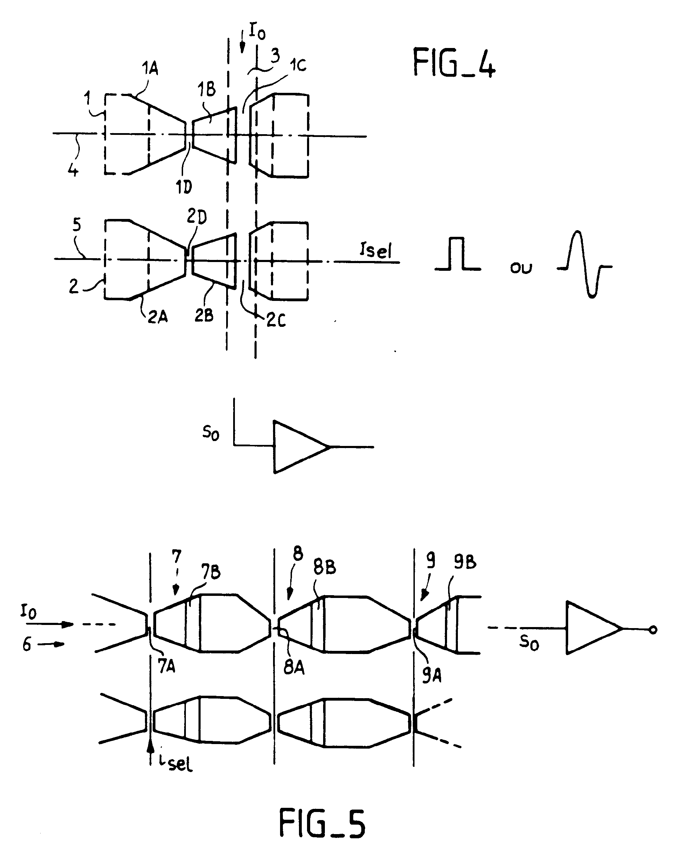

On va d'abord décrire des modes de réalisation mettant en oeuvre le multiplexage par commande de l'angle de magnétisation des têtes. On a représenté en figures 4 et 5 deux tels modes de réalisation. Sur la figure 4, on a représenté deux têtes élémentaires 1, 2 d'une même colonne. Chaque tête 1, 2 comporte essentiellement un premier pôle normal 1A, 2A et un second pôle 1B, 2B dans lequel on a inséré un élément magnéto-résistif 1C, 2C. Dans le cas présent, l'ensemble des éléments magnéto-résistifs 1C, 2C,... d'une même colonne est réalisé par un conducteur continu 3 en matériau magnéto-résistif. Selon une variante, non représentée, les différents éléments 1C, 2C,... sont réalisés en tronçons séparés et connectés par une couche de matériau bon conducteur ayant sensiblement les dimensions du conducteur 3.

Les pôles sont avantageusement réalisés selon une technologie planaire, par exemple telle que décrite dans la Demande de Brevet français 88 05592. On fabrique les éléments magnéto-résistifs, ou le conducteur 3, de façon à leur conférer une anisotropie perpendiculaire aux lignes de flux générées par la bande magnétique à lire, lors de leur dépôt ou grâce à une phase du post-traitement, ou grâce à une couche de couplage anti-ferromagnétique. Ainsi, en l'absence d'influence extérieure, le couplage entre la bande et le matériau magnéto-résistif est minimal.

Des conducteurs 4, 5 sensiblement perpendiculaires ou légèrement obliques par rapport aux colonnes (3) d'éléments magnéto-résistifs, et passant à proximité des entrefers 1D, 2D,... des têtes élémentaires, constituent des lignes de sélection de têtes élémentaires.

Le fonctionnement de la tête décrite ci-dessus est le suivant. Pour activer les éléments magnéto-résistifs d'une ligne, par exemple la ligne correspondant au conducteur 4, on injecte un courant dans ce conducteur. Le champ magnétique. ainsi créé est insuffisant pour effacer la bande magnétique au contact de la tête, mais oriente la magnétisation des éléments magnéto-résistifs intersectés par ce conducteur à 45° par rapport à la direction des fils de lignes. Grâce à ce changement d'orientation, la sensibilité des éléments magnéto-résistifs devient maximale et la variation de résistance produite par le champ de la bande génère un signal mesurable à la sortie de la colonne correspondante.

L'excitation successive de toutes les lignes de sélection de la tête multipiste produit ainsi à la sortie de chaque colonne un signal représentant successivement la magnétisation de la bande lue par chacune des têtes élémentaires d'une colonne.

Le signal de sélection peut être une impulsion de courant ($I_{sel}$) ou un courant alternatif prenant successivement les valeurs $+I_{sel}$ et $-I_{sel}$ pendant une ou plusieurs périodes.

Selon le mode de réalisation de la figure 5, dans chaque ligne de têtes élémentaires, par exemple la ligne 6, partiellement représentée sur la figure 5, les pôles des différentes têtes élémentaires 7, 8, 9... sont reliés en série, un matériau conducteur non magnétique remplissant les entrefers 7A, 8A, 9A,... de ces têtes. Les éléments magnéto-résistifs 7B, 8B, 9B,... des têtes 7, 8, 9... sont insérés dans l'une des deux pièces polaires de chaque tête. Dans chaque ligne, les pièces polaires et le matériau d'entrefer servent de conducteurs électriques joignant les éléments magnéto-résistifs.

Selon une variante, non représentée, des éléments magnéto-résistifs sont insérés dans chacune des pièces polaires de chaque tête élémentaire.

Selon une autre variante, non représentée, les pôles des têtes élémentaires sont eux-mêmes en matériau magnéto-résistif. Dans ce cas, les pôles ne sont en contact avec la bande magnétique à lire qu'à proximité de l'entrefer.

Dans tous les modes de réalisation, les caractéristiques du circuit magnétique des têtes élémentaires (forme et dimensions des pôles, perméance de l'élément magnéto-résistif...) sont telles que le courant de sélection puis se orienter convenablement l'aimantation de l'élément magnéto-résistif, sans générer un champ de trop forte amplitude dans l'entrefer des têtes.

Comme mentionné ci-dessus, le multiplexage des têtes élémentaires peut être réalisé par commande de la perméance de ces têtes. La commande (ou modulation) de la perméance de têtes magnétiques est connue en soi, en particulier pour réaliser des têtes de lecture fonctionnant selon le principe dit de "flux-gate". Par ailleurs, on connaît d'après les Demandes de Brevets français 89 08015 et 89 09887 des solutions du problème de la commande de têtes d'écriture multipistes, en particulier des procédés de commande des têtes par saturation des pôles.

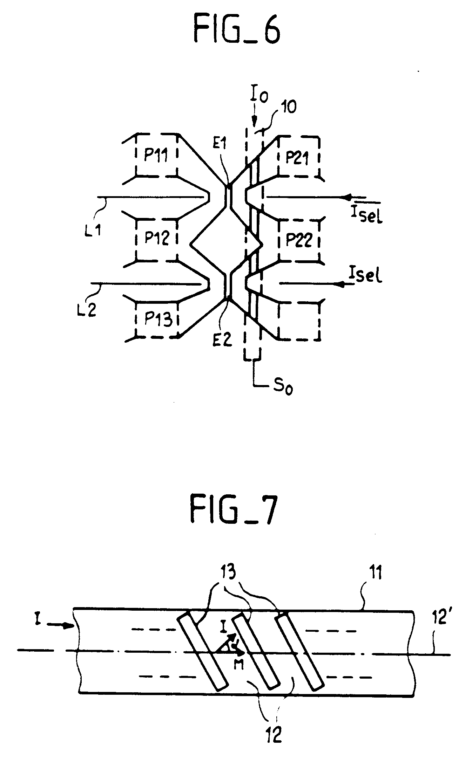

On a représenté en figure 6, un mode de réalisation de tête de lecture fonctionnant par modulation de perméance des circuits magnétiques de ses têtes élémentaires. La tête de lecture comporte des pavés polaires à surface sensiblement carrée, disposés en rangées et colonnes, les rangées pouvant être perpendiculaires ou sensiblement perpendiculaires aux colonnes. Les pavés sont respectivement référencés P11, P12, P13,... pour la première colonne, P21, P22, P23.,. pour la seconde colonne, etc. Dans chaque colonne, chaque pavé est relié à chaque pavé adjacent par deux "ponts" de matériau magnétique ayant chacun sensiblement une forme de "V" à pointe légèrement aplanie, les deux "V" reliant à chaque fois deux pavés adjacents ayant leurs pointes dirigées en sens contraires. Les forme et dimensions des "V" sont telles qu'entre deux colonnes adjacentes, les pointes en vis-à-vis des "V" définissent à chaque fois un entrefer, qui est l'entrefer des têtes magnétiques élémentaires. Dans chaque colonne de pavés, on insère dans les deux branches des "V" de ces pavés, se trouvant d'un même côté de cette colonne, par exemple à gauche comme représenté en figure 6, des éléments magnéto-résistifs, ces éléments faisant partie d'une même bande 10 de matériau magnéto-résistif, ou étant individualisés et reliés, en colonnes, par du matériau bon conducteur électrique, comme dans le cas de la figure 4. Chaque colonne d'éléments magnéto-résistifs est parcourue par un courant $I_o$, comme dans le cas de la figure 4. Des conducteurs de lignes L1, L2..., sensiblement perpendiculaires aux colonnes de pavés, passent au niveau de chaque entrefer E1, E2,... Le courant $I_{sel}$ envoyé dans chacun de ces conducteurs de lignes a une amplitude suffisante pour saturer les pôles correspondants et donc pour inhiber les lignes de têtes élémentaires correspondantes. Seule la ligne n de têtes dont le conducteur de ligne Ln correspondant n'est pas parcouru par un courant $I_{sel}$ transfère le flux de la bande lue vers l'élément magnéto-résistif correspondant, et l'on peut alors recueillir l'information correspondante sur chacune des colonnes. Il suffit alors d'activer la colonne désirée (ou d'inhiber toutes les autres).

Sur la figure 7, on a représenté une partie 11 d'un circuit magnétique permettant d'orienter de façon appropriée la direction de passage du courant traversant un matériau magnéto-résistif 12. Ce matériau 12 se présente sous forme de bande rectangulaire étroite dans laquelle on insère au moins deux noyaux 13 de matériau très bon conducteur électrique de même épaisseur que celle de la bande. Ces noyaux 13 ont une forme sensiblement rectangulaire. Leur longueur est à peu près égale à la largeur de la bande 12, et leur largeur est égale à environ 1/5ème à 1/10 de leur longueur. Ces noyaux 13 sont disposés obliquement par rapport à la perpendiculaire à l'axe 12' de la bande 12, à une distance mutuelle inférieure à la largeur de la bande 12. L'angle formé entre l'axe longitudinal des noyaux 13 et l'axe 12' est par exemple d'environ 45°. Ainsi, un courant I passant dans la bande 12 a tendance à traverser les éléments de la bande compris entre des noyaux 13 consécutifs obliquement par rapport à l'axe 12', ce qui permet d'obtenir un angle entre la magnétisation qui reste dans la direction de la bande et le courant qui circule obliquement dans la bande, de manière à obtenir la configuration de maximum de sensibilité comme sur la figure 3.

Une bande telle que la bande 12 peut remplacer les bandes 3 (figure 4) ou 7B, 8B,... (figure 5) ou 10 (figure 6), les noyaux 13 étant orientés de façon appropriée tenant compte de la direction des pôles par rapport aux bandes 3 ou 10 ou 7B, 8B,...

**Revendications**

1. Tête de lecture multipiste comportant un réseau matriciel de têtes élémentaires de type magnéto-résistif comprenant chacune un élément magnéto-résistif dans son circuit magnétique, caractérisée en ce qu'au moins un élément magnéto-résistif (1c, 2c, ...) est inséré en série dans le circuit magnétique (1A-1B, 2A-2B, ...) de chaque tête élémentaire, l'ensemble des éléments magnéto-résistifs d'une même colonne étant électriquement reliés à un conducteur de colonne, les lignes de sélection de têtes élémentaires étant constituées par des conducteurs (4, 5) sensiblement perpendiculaires ou légèrement obliques par rapport aux colonnes d'éléments magnéto-résistifs et passant à proximité des entrefers (1D, 2D, ...) des têtes élémentaires, un courant de sélection étant injecté dans la ligne à sélectionner.

2. Tête de lecture comportant un réseau matriciel de têtes élémentaires de type magnéto-résistif comprenant chacune un élément magnéto-résistif dans son circuit magnétique, caractérisée en ce que dans chaque colonne les éléments magnéto-résistifs des têtes élémentaires sont électriquement reliées à un conducteur de colonne (10), l'élément magnéto-résistif étant inséré en série dans l'un des pôles de la tête élémentaire, les lignes matricielles étant constituées par des conducteurs de lignes (L1, L2, ...) sensiblement perpendiculaires aux colonnes, un courant d'inhibition étant injecté dans les lignes non sélectionnées pour saturer les pôles des têtes élémentaires de ces lignes.

3. Tête de lecture selon la revendication 2, caractérisée en ce que dans chaque tête élémentaire, les pôles ont sensiblement une forme de "V", les extrémités des "V" étant reliées à des pavés (P11, P12, ... P21, P22, ...), les éléments magnéto-résistifs étant insérés dans chaque branche de l'un des "V".

4. Tête de lecture multipiste selon la revendication 1, 2 ou 3, caractérisée par le fait que dans chaque colonne de têtes élémentaires les éléments magnéto-résistifs font partie d'une même bande de matériau magnéto-résistif (3, 10).

5. Tête de lecture multipiste selon la revendication 1, 2 ou 3, caractérisée par le fait que dans chaque colonne de têtes élémentaires les éléments magnéto-résistifs sont individualisés et reliés par du matériau bon conducteur électrique.

6. Tête de lecture multipiste selon la revendication 1, caractérisée par le fait que dans chaque ligne de têtes élémentaires, les circuits magnétiques des têtes élémentaires sont reliés électriquement en série (figure 5).

7. Tête de lecture multipiste selon l'une des revendications précédentes, caractérisée par le fait que les éléments magnéto-résistifs (12) font partie d'une bande (11) de matériau magnéto-résistif dans laquelle sont inclus des noyaux (13) de matériau très bon conducteur électrique, noyaux dont l'axe est oblique par rapport à la perpendiculaire à l'axe (12') de la bande.

8. Tête de lecture multipiste selon l'une des revendications précédentes, caractérisée en ce que les éléments magnéto-résistifs sont fabriqués de façon à leur conférer une anisotropie perpendiculaire aux lignes de flux générées par la bande magnétique à lire.

9. Tête de lecture selon la revendication 8, caractérisée en ce que l'anisotropie est obtenue lors du dépôt des éléments magnéto-résistifs.

10. Tête de lecture selon la revendication 8, caractérisée en ce que l'anisotropie est obtenue grâce à une phase du post-traitement des éléments magnéto-résistifs.

11. Tête de lecture selon la revendication 8, caractérisée en ce que l'anisotropie est obtenue grâce à une couche de couplage antiferromagnétique.

12. Tête de lecture multipiste selon l'une des revendications précédentes, caractérisée en ce qu'elle utilise comme élément magnéto-résistif au moins une partie des pôles magnétiques eux-mêmes.

13. Appareil de lecture de supports magnétiques enregistrés en multipiste, caractérisé par le fait qu'il comporte une tête de lecture selon l'une des revendications précédentes.

**Patentansprüche**

1. Mehrspur-Lesekopf mit einem Matrixnetz von Elementarköpfen des magnetoresistiven Typs, von denen jeder ein magnetoresistives Element in seinem Magnetkreis enthält, dadurch gekennzeichnet, daß wenigstens ein magnetoresistives Element (1c, 2c, ...) in Serie in den Magnetkreis (1A-1B, 2A-2B, ...) jedes Elementarkopfes eingefügt ist, wobei die Gesamtheit der magnetoresistiven Elemente einer gleichen Spalte elektrisch mit einem Spaltenleiter verbunden sind, wobei die Zeilen für die Auswahl der Elementarköpfe durch Leiter (4, 5) gebildet sind, die im wesentlichen senkrecht oder leicht schräg zu den Spalten von magnetoresistiven Elementen sind und in der Nähe der Luftspalte (1D, 2D, ...) der Elementarköpfe vorbeigehen, und wobei ein Auswahlstrom in die auszuwählende Zeile eingespeist wird.

2. Lesekopf mit einem Matrixnetz von Elementarköpfen des magnetoresistiven Typs, von denen jeder ein magnetoresistives Element in seinem Magnetkreis enthält, dadurch gekennzeichnet, daß in jeder Spalte die magnetoresistiven Elemente der Elementarköpfe elektrisch mit einem Spaltenleiter (10) verbunden sind, wobei das magnetoresistive Element in Serie in einen der Pole des Elementarkopfes eingefügt ist, wobei die Matrixzeilen durch Zeilenleiter (L1, L2, ...) gebildet sind, die im wesentlichen senkrecht zu den Spalten sind, und wobei ein Sperrstrom in die nicht ausgewählten Zeilen eingespeist wird, um die Pole der Elementarköpfe dieser Zeilen zu sättigen.

3. Lesekopf nach Anspruch 2, dadurch gekennzeichnet, daß in jedem Elementarkopf die Pole im wesentlichen eine "V"-Form haben, wobei die Enden des "V" mit Blöcken (P11, P12, ... P21, P22, ...) verbunden sind, und wobei die magnetoresistiven Elemente in jeden Schenkel eines der "V" eingefügt sind.

4. Mehrspur-Lesekopf nach Anspruch 1, 2 oder 3, dadurch gekennzeichnet, daß in jeder Spalte von Elementarköpfen die magnetoresistiven Elemente Teile eines gleichen Streifens von magnetoresistivem Material (3, 10) sind.

5. Mehrspur-Lesekopf nach Anspruch 1, 2 oder 3, dadurch gekennzeichnet, daß in jeder Spalte von Elementarköpfen die magnetoresistiven Elemente einzeln ausgebildet und durch elektrisch gut leitendes Material verbunden sind.

6. Mehrspur-Lesekopf nach Anspruch 1, dadurch gekennzeichnet, daß in jeder Zeile von Elementarköpfen die Magnetkreise der Elementarköpfe elektrisch in Serie geschaltet sind (Fig. 5).

7. Mehrspur-Lesekopf nach einem der vorhergehenden Ansprüche, dadurch gekennzeichnet, daß die magnetoresistiven Elemente (12) Teile eines Streifens (11) von magnetoresistivem Material sind, in dem Kerne (13) aus elektrisch sehr gut leitendem Material eingeschlossen sind, wobei die Achse der Kerne schräg zur Senkrechten auf die Achse (12') des Streifens ist.

8. Mehrspur-Lesekopf nach einem der vorhergehenden Ansprüche, dadurch gekennzeichnet, daß die magnetoresistiven Elemente so hergestellt sind, daß ihnen eine Anisotropie senkrecht zu den Flußlinien erteilt ist, die von dem zu lesenden Magnetband erzeugt werden.

9. Lesekopf nach Anspruch 8, dadurch gekennzeichnet, daß die Anisotropie beim Auftragen der magnetoresistiven Elemente erhalten wird.

10. Lesekopf nach Anspruch 8, dadurch gekennzeichnet, daß die Anisotropie durch eine Phase der Nachbehandlung der magnetoresistiven Elemente erhalten wird.

11. Lesekopf nach Anspruch 8, dadurch gekennzeichnet, daß die Anisotropie durch eine antiferromagnetische Kopplungsschicht erhalten wird.

12. Mehrspur-Lesekopf nach einem der vorhergehenden Ansprüche, dadurch gekennzeichnet, daß er als magnetoresistives Element wenigstens einen Teil der Magnetpole selbst verwendet.

13. Lesegerät für Mehrspur-Magnetaufzeichnungsträger, dadurch gekennzeichnet, daß es einen Lesekopf nach einem der vorhergehenden Ansprüche enthält.

## Claims

1. Multitrack read head including a matrix network of elementary heads of magnetoresistive type, each comprising a magnetoresistive element in its magnetic circuit, characterized in that at least one magnetoresistive element (1c, 2c, ...) is inserted in series into the magnetic circuit (1A-1B, 2A-2B, ...) of each elementary head, the set of magnetoresistive elements of a single column being electrically linked to a column conductor, the elementary-head selection lines consisting of conductors (4, 5) substantially perpendicular or slightly oblique with respect to the columns of magnetoresistive elements and passing close to the gaps (1D, 2D, ...) of the elementary head, a selection current being injected into the line to be selected.

2. Read head including a matrix network of elementary heads of magnetoresistive type, each comprising a magnetoresistive element in its magnetic circuit, characterized in that, in each column, the magnetoresistive elements of the elementary heads are electrically linked to a column conductor (10), the magnetoresistive element being inserted in series into one of the poles of the elementary head, the matrix lines consisting of line conductors (L1, L2, ...) substantially perpendicular to the columns, an inhibition current being injected into the non-selected lines in order to saturate the poles of the elementary heads of these lines.

3. Read head according to Claim 2, characterized in that, in each elementary head, the poles are substantially in the shape of a "V", the ends of the "Vs" being linked to blocks (P11, P12, ... P21, P22, ...), the magnetoresistive elements being inserted into each branch of one of the "Vs".

4. Multitrack read head according to Claim 1, 2 or 3, characterized in that, in each column of elementary heads, the magnetoresistive elements form part of the same strip of magnetoresistive material (3, 10).

5. Multitrack read head according to Claim 1, 2 or 3, characterized in that, in each column of elementary heads, the magnetoresistive elements are individualized and linked by material which is a good electrical conductor.

6. Multitrack read head according to Claim 1, characterized in that, in each line of elementary heads, the magnetic circuits of the elementary heads are electrically linked in series (Figure 5).

7. Multitrack read head according to one of the preceding claims, characterized in that the magnetoresistive elements (12) form part of a strip (11) of magnetoresistive material in which cores (13) of material which is a very good electrical conductor are included, in which cores the axis is oblique with respect to the perpendicular to the axis (12') of the strip.

8. Multitrack read head according to one of the preceding claims, characterized in that the magnetoresistive elements are manufactured in such a way as to render them anisotropic perpendicular to the lines of flux generated by the magnetic tape to be read.

9. Read head according to Claim 8, characterized in that the anisotropy is obtained during deposition of the magnetoresistive elements.

10. Read head according to Claim 8, characterized in that the anisotropy is obtained by virtue of a phase of the post-processing of the magnetoresistive elements.

11. Read head according to Claim 8, characterized in that the anisotropy is obtained by virtue of an anti-ferromagnetic coupling layer.

12. Multitrack read head according to one of the preceding claims, characterized in that, as magnetoresistive element, it uses at least a part of the magnetic poles themselves.

13. Apparatus for reading magnetic media recorded in multitrack mode, characterized in that it includes a read head according to one of the preceding claims.

# FIG_1

# FIG_2

# FIG_3

8

FIG_4

FIG_5

# FIG_6

# FIG_7